**Europäisches Patentamt**

**European Patent Office**

**Office européen des brevets**

(19)

(11) **EP 1 355 161 A1**

(12) ## DEMANDE DE BREVET EUROPEEN

(43) Date de publication:
**22.10.2003 Bulletin 2003/43**

(51) Int Cl.⁷: **G01P 21/00**, G01P 15/00, B60G 17/015

(21) Numéro de dépôt: **03290883.2**

(22) Date de dépôt: **09.04.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **18.04.2002 FR 0204873**

(71) Demandeur: **Peugeot Citroen Automobiles SA**
**78140 Vélizy Villacoublay (FR)**

(72) Inventeurs:
• **Gouriet, Pascal Raymond**
**92320 Chatillon (FR)**
• **Djama, Zahir**
**75015 Paris (FR)**

(74) Mandataire: **Thinat, Michel**
**Cabinet Weinstein,**
**56 A, rue du Faubourg Saint-Honoré**
**75008 Paris (FR)**

(54) **Procédé pour évaluer des accélérations à mesures intrinsèquement redondantes**

(57)     L'invention concerne un procédé pour évaluer des accélérations subies suivant des directions longitudinale (L), transversale (T) et verticale (V), par exemple par une roue d'un véhicule automobile, au moyen d'un accéléromètre présentant trois axes sensibles mutuellement perpendiculaires (X, Y, Z).

Selon l'invention, l'accéléromètre est orienté de manière qu'aucun axe sensible (X, Y, Z) ne soit parallèle à l'une des directions longitudinale (L), transversale (T) et verticale (V), de sorte que la mesure fournie par l'accéléromètre pour chaque axe sensible (X, Y, Z) rend compte de composantes d'accélération de la roue suivant deux au moins des directions longitudinale (L), transversale (T) et verticale (V).

Le procédé permet de développer des stratégies de vérification des mesures sans augmentation du nombre de capteurs.

Fig.2

EP 1 355 161 A1

**Description**

La présente invention concerne, de façon générale, les techniques d'acquisition et de traitement de signal appliquées à des pièces mobiles et en particulier aux véhicules, et notamment aux véhicules automobiles.

Plus précisément, l'invention concerne un procédé pour évaluer des accélérations subies par une pièce mobile, notamment un organe d'un véhicule, tel qu'un véhicule automobile, présentant une mobilité suivant trois directions mutuellement perpendiculaires comprenant une direction longitudinale horizontale, dans laquelle le véhicule se déplace de manière privilégiée, une direction transversale horizontale, et une direction verticale, ce procédé comprenant une phase d'installation consistant à fixer à l'organe un accéléromètre présentant des premier, second et troisième axes sensibles mutuellement perpendiculaires et fournissant des première, seconde et troisième mesures d'accélération suivant les trois axes sensibles respectifs.

L'essor considérable des techniques de traitement de signaux a conduit à la prise en compte d'un nombre croissant de paramètres physiques liés à la dynamique des véhicules automobiles dans le but d'augmenter la sécurité et le confort de ces derniers, les accélérations constituant une classe importante de ces paramètres physiques.

La complexité structurelle croissante qui en résulte pour les véhicules automobiles, et les exigences en matière de fiabilité de leurs organes essentiels, incitent à rechercher la possibilité de vérifier les mesures effectuées.

Un moyen évident d'obtenir cette possibilité consiste bien sûr à recourir à deux capteurs pour chaque paramètre physique à mesurer, et à comparer les mesures fournies par les capteurs appariés.

Une telle solution n'est cependant pas applicable dans la mesure où elle tend finalement à prévoir l'installation de trois capteurs par mesure pour permettre de lever l'ambiguïté en cas de discordance de deux d'entre eux, et où elle augmente de façon inacceptable la complexité et le coût de l'équipement des véhicules, même dans sa mise en oeuvre la plus simple.

Dans ce contexte, la présente invention a pour but de proposer un procédé destiné à évaluer des accélérations subies par un organe d'un véhicule et bénéficiant d'une certaine redondance sans aucune augmentation du nombre de capteurs.

A cette fin, le procédé de l'invention, par ailleurs conforme à la définition générique qu'en donne le préambule ci-dessus, est essentiellement caractérisé en ce que la phase d'installation est mise en oeuvre en donnant à l'accéléromètre une orientation dans laquelle aucun axe sensible n'est parallèle à l'une des directions longitudinale, transversale et verticale, ce dont il résulte que la mesure fournie par l'accéléromètre pour chaque axe sensible rend compte de composantes d'accélération de l'organe suivant deux au moins des directions longitudinale, transversale et verticale.

Par exemple, l'inclinaison des axes sensibles de l'accéléromètre se déduit d'une configuration dans laquelle les premier, second et troisième axes sensibles sont respectivement alignés sur les directions longitudinale, transversale et verticale au moins par une première rotation de l'accéléromètre autour du troisième axe, d'amplitude égale à un premier angle d'inclinaison, et par une deuxième rotation de l'accéléromètre autour du deuxième axe, d'amplitude égale à un second angle d'inclinaison, ce dont il résulte que chacune des première et troisième mesures rend compte de composantes d'accélération de l'organe suivant les trois directions de mobilité de ce dernier, et que la seconde mesure rend compte de composantes d'accélération de l'organe au moins suivant les directions longitudinale et transversale.

Il est également possible de prévoir que l'inclinaison des axes sensibles de l'accéléromètre se déduise d'une configuration dans laquelle les premier, second et troisième axes sensibles sont respectivement alignés sur les directions longitudinale, transversale et verticale par les première et deuxième rotations ainsi que par une troisième rotation de l'accéléromètre autour du premier axe, d'amplitude égale à un troisième angle d'inclinaison, ce dont il résulte que chacune des mesures rend compte de composantes d'accélération de l'organe suivant les trois directions de mobilité de ce dernier.

Dans l'un et l'autre de ces deux cas, le procédé de l'invention comprend avantageusement une phase d'exploitation des mesures incluant une étape de calcul de changement de référentiel, dans laquelle les composantes d'accélération de l'organe suivant les directions longitudinale, transversale et verticale sont calculées par combinaison des première, seconde et troisième mesures et de fonctions trigonométriques des angles d'inclinaison qui dépendent uniquement de l'orientation de l'accéléromètre.

Cette phase d'exploitation des mesures peut inclure une procédure de surveillance de fonctionnement de l'accéléromètre, dans laquelle un signal de défaillance est émis au moins lorsque la valeur de l'une au moins des mesures reste constamment nulle ou devient aberrante alors que l'une au moins des autres mesures reste opérationnelle et prend une valeur non nulle et non aberrante et variable dans le temps.

Il est alors possible de prévoir, dans la phase d'exploitation des mesures, une étape de vérification de cohérence, au moins mise en oeuvre lorsque l'une au moins des composantes d'accélération obtenues à l'issue de l'étape de calcul de changement de référentiel est inférieure à un seuil prédéterminé, dans laquelle au moins une composante d'accélération inférieure au seuil est négligée, dans laquelle une première valeur d'une composante d'accélération non négligée est calculée à partir d'une première combinaison d'un premier couple de mesures et de fonctions trigonométriques des angles d'inclinaison qui dépendent uniquement de l'orientation de l'accéléromètre, dans laquelle une seconde valeur de la même composante d'accélération non négligée est calculée à partir d'une seconde combinaison d'un second couple de mesures et de fonctions trigonométriques des angles d'inclinaison qui dépendent uniquement de l'orientation de l'accéléromètre, et dans laquelle un signal d'incohérence est émis lorsque les première et seconde valeurs de la composante d'accélération non négligée présentent entre elles une différence relative supérieure à une limite prédéterminée.

La phase d'exploitation des mesures peut aussi inclure une procédure d'estimation par défaut de la composante d'accélération suivant la direction verticale, déclenchée par le signal de défaillance au moins lorsque la valeur de la troisième mesure reste constamment nulle ou devient aberrante alors que l'une au moins des première et seconde mesures reste opérationnelle et prend une valeur non nulle et non aberrante et variable dans le temps.

En particulier, dans le cas habituel où les accélérations subies par l'organe suivant les directions longitudinale et transversale évoluent dans un premier domaine de fréquence alors que les accélérations subies par l'organe suivant la direction verticale évoluent dans un second domaine de fréquence, différent du premier, la procédure d'estimation par défaut de la composante d'accélération suivant la direction verticale comprend avantageusement une étape de filtrage appliquée à l'une au moins des mesures opérationnelles et dans laquelle est évaluée l'amplitude de cette mesure opérationnelle dans le second domaine de fréquence, et une étape de reconstruction dans laquelle la composante d'accélération suivant la direction verticale est estimée à partir au moins de l'amplitude de la mesure opérationnelle filtrée et d'une fonction trigonométrique dépendant uniquement de l'orientation de l'accéléromètre.

Le procédé de l'invention peut notamment être mis en oeuvre en donnant à chaque angle d'inclinaison une valeur comprise entre 10 degrés et 20 degrés environ, et peut avantageusement être appliqué au cas où l'organe dont les accélérations sont mesurées est constitué par une roue d'un véhicule automobile. Elle s'applique également à toute pièce mobile dans un référentiel spatial donné.

D'autres caractéristiques et avantages de l'invention ressortiront clairement de la description qui en est faite ci-après, à titre indicatif et nullement limitatif, en référence aux dessins annexés, dans lesquels:

- la Figure 1 est une vue de face et en coupe partielle d'une partie d'un essieu de véhicule automobile, représentant l'implantation d'un accéléromètre ;
- la Figure 2 est une vue en perspective d'un référentiel L, V, T lié au véhicule, et d'un référentiel X, Y, Z lié à l'accéléromètre ;
- la Figure 3 est un schéma général du déroulement possible de la phase d'exploitation des mesures d'accélération ;
- la Figure 4 est un schéma illustrant le contenu possible de la procédure de surveillance ;
- la Figure 5 est un schéma illustrant le contenu possible de l'étape de vérification ; et
- la Figure 6 est un schéma illustrant le contenu possible de la procédure d'estimation.

Comme annoncé précédemment, l'invention concerne un procédé pour évaluer les accélérations subies par un organe 1 présentant une mobilité suivant trois directions mutuellement perpendiculaires.

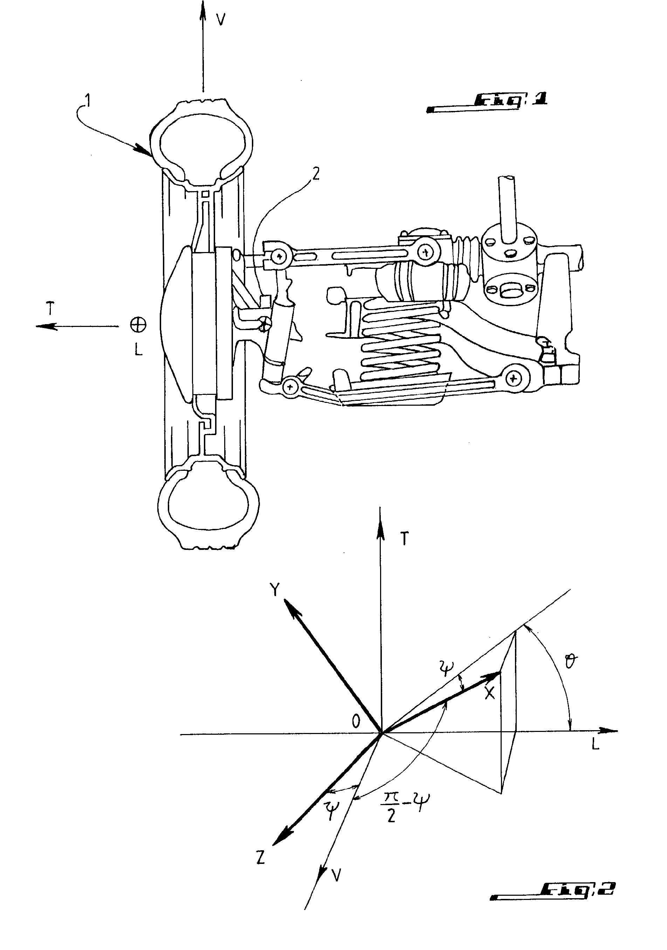

La figure 1 illustre l'application privilégiée de l'invention, dans laquelle l'organe 1 est constitué par une roue d'un véhicule automobile, cette roue étant mobile suivant une direction longitudinale horizontale L, qui est celle dans laquelle le véhicule se déplace en ligne droite en marche avant, une direction transversale horizontale T, et une direction verticale V.

Ce procédé comprend une phase préliminaire d'installation, dans laquelle un accéléromètre 2 est fixé à l'organe 1 dont les accélérations sont à mesurer, la figure 1 illustrant plus précisément l'installation du l'accéléromètre 2 à proximité immédiate du centre de la roue 1.

Dans la mesure où les accélérations de la roue 1 doivent être déterminées suivant trois axes, l'accéléromètre 2 présente lui-même trois axes sensibles mutuellement perpendiculaires, notés X, Y, et Z, et fournit trois mesures d'accélération correspondantes, notées Ax, Ay, et Az, dont chacune représente l'accélération suivant l'axe sensible X, Y, Z de même ordre.

Selon l'invention, la phase d'installation est mise en oeuvre en donnant à l'accéléromètre 2 une orientation dans laquelle aucun des axes sensibles X, Y, et Z n'est parallèle à l'une des directions longitudinale L, transversale T et verticale V.

Grâce à cette disposition, la mesure Ax, Ay, et Az fournie par l'accéléromètre 2 pour chacun des axes sensibles respectifs X, Y, et Z rend compte de composantes d'accélération de l'organe 1 suivant deux au moins des directions longitudinale L, transversale T et verticale V, ces composantes étant respectivement notées Al, At, et Av pour les axes L, T, et V.

L'hypothèse sera faite ci-après que les mesures Ax, Ay, et Az sont des mesures linéairement et directement représentatives des accélérations subies suivant les axes respectifs X, Y, et Z.

A défaut, le procédé de l'invention devra prévoir, de façon connue en soi, une étape de linéarisation et de normalisation permettant de passer des mesures brutes délivrées par l'accéléromètre 2 aux mesures Ax, Ay, et Az présentant les qualités précédemment définies.

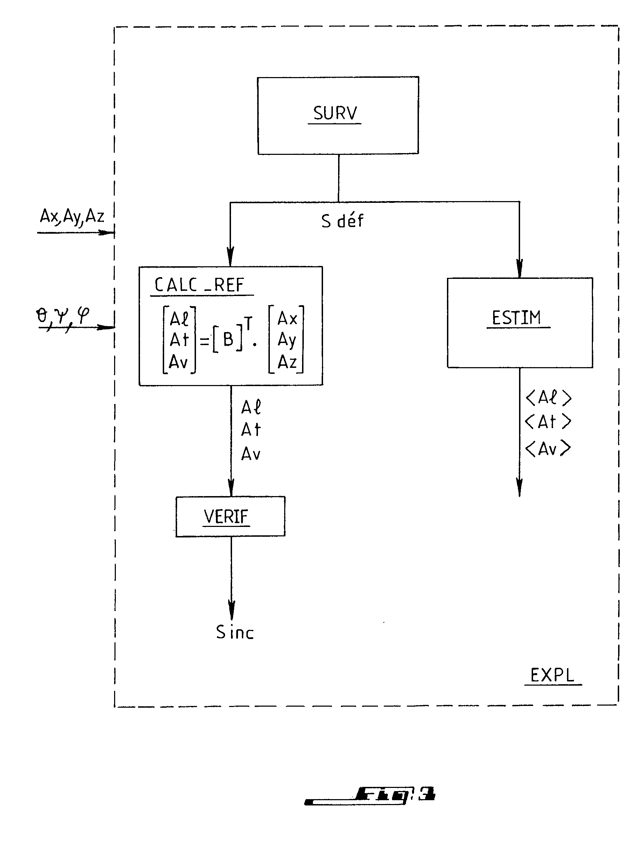

Comme le montre la figure 2, l'inclinaison des axes sensibles X, Y, et Z de l'accéléromètre 2 se déduit d'une configuration initiale, dans laquelle ces axes sont respectivement alignés sur les directions longitudinale L, transversale T et verticale V, par au moins deux rotations de l'accéléromètre 2.

La première rotation consiste à faire tourner l'accéléromètre 2, autour de son troisième axe sensible Z, d'un premier angle d'inclinaison noté $\theta$.

Et la deuxième rotation, qui par souci de clarté et de simplicité sera supposée être effectuée après la première, consiste à faire tourner l'accéléromètre 2, autour de son deuxième axe sensible Y, d'un second angle d'inclinaison noté $\psi$.

Dans ces conditions, comme il sera démontré ci-après, chacune des mesures Ax et Az rend compte de composantes d'accélération Al, At et Av de la roue 1 suivant les trois directions L, T, et V de mobilité de cette roue, et la mesure Ay rend compte des composantes d'accélération Al et At de cette roue suivant les directions longitudinale L et transversale T.

Ces deux premières rotations peuvent être suivies d'une troisième rotation, qui sera elle-même considérée comme succédant à la deuxième, et qui consiste à faire tourner l'accéléromètre 2, autour de son premier axe sensible X, d'un troisième angle d'inclinaison noté $\phi$.

Typiquement, chaque angle d'inclinaison $\theta$, $\psi$, $\phi$ peut être choisi entre 10 degrés et 20 degrés environ.

Dans ces conditions, chacune des mesures Ax, Ay, et Az rend compte de composantes d'accélération Al, At, et Av de la roue 1 suivant les trois directions L, T, V de mobilité de cette dernière.

Dans la configuration posée comme initiale, c'est-à-dire dans l'orientation de l'accéléromètre pour laquelle les axes sensibles X, Y, et Z sont respectivement alignés sur les directions longitudinale L, transversale T et verticale V, les vecteurs [Ax, Ay, Az] et [Al, At, Av] sont égaux, c'est-à-dire qu'ils sont liés entre eux par la matrice identité I, à savoir :

$$\begin{bmatrix} Ax \\ Ay \\ Az \end{bmatrix} = [I] \otimes \begin{bmatrix} Al \\ At \\ Av \end{bmatrix}, \quad \text{avec} \quad [I] = \begin{bmatrix} 1 & 0 & 0 \\ 0 & 1 & 0 \\ 0 & 0 & 1 \end{bmatrix}.$$

La première rotation de l'accéléromètre se traduit par l'apparition d'une matrice de rotation [R1] telle que :

$$\begin{bmatrix} Ax \\ Ay \\ Az \end{bmatrix} = [R1] \otimes \begin{bmatrix} Al \\ At \\ Av \end{bmatrix}, \quad \text{avec} \quad [R1] = \begin{bmatrix} \cos\Theta & \sin\Theta & 0 \\ -\sin\Theta & \cos\Theta & 0 \\ 0 & 0 & 1 \end{bmatrix}.$$

De même, les deuxième et troisième rotations introduisent des matrices de rotation respectives [R2] et [R3] telles que :

$$[R2] = \begin{bmatrix} \cos\Psi & 0 & -\sin\Psi \\ 0 & 1 & 0 \\ \sin\Psi & 0 & \cos\Psi \end{bmatrix}, \quad \text{et} \quad [R3] = \begin{bmatrix} 1 & 0 & 0 \\ 0 & \cos\Phi & \sin\Phi \\ 0 & -\sin\Phi & \cos\Phi \end{bmatrix},$$

de sorte qu'à l'issue des trois rotations, les vecteurs [Ax, Ay, Az] et [Al, At, Av] sont liés l'un à l'autre par la relation :

$$\begin{bmatrix} Ax \\ Ay \\ Az \end{bmatrix} = [R3] \otimes [R2] \otimes [R1] \otimes \begin{bmatrix} Al \\ At \\ Av \end{bmatrix},$$

c'est-à-dire encore :

$$\begin{bmatrix} Ax \\ Ay \\ Az \end{bmatrix} = \begin{bmatrix} R11 & R12 & R13 \\ R21 & R22 & R23 \\ R31 & R32 & R33 \end{bmatrix} \otimes \begin{bmatrix} Al \\ At \\ Av \end{bmatrix},$$

avec

R11 = cos (Ψ) .cos(Θ)
R12 = cos(Ψ) .sin(Θ)
R13 = -sin(Ψ)
R21 = sin(Φ) .sin(Ψ) .cos(Θ)-cos(Φ) .sin(Θ)
R22 = sin(Φ) .sin(Ψ) .sin(Θ)+cos(Φ) .cos(Θ)
R23 = sin(Φ) .cos(Ψ)
R31 = cos(Φ) .sin(Ψ) .cos(Θ) +sin(Φ) .sin(Θ)
R32 = cos(Φ) .sin(Ψ) .sin(Θ) -sin(Φ) .cos(Θ)
R33 = cos(Φ) .cos(Ψ)

Dans ces conditions, les accélérations Al , At, et Av subies par la roue 1 suivant les directions L, T, et V sont obtenues à partir des mesures Ax, Ay, et Az par la relation :

$$\begin{bmatrix} Al \\ At \\ Av \end{bmatrix} = \begin{bmatrix} R11 & R21 & R31 \\ R12 & R22 & R32 \\ R13 & R23 & R33 \end{bmatrix} \otimes \begin{bmatrix} Ax \\ Ay \\ Az \end{bmatrix}.$$

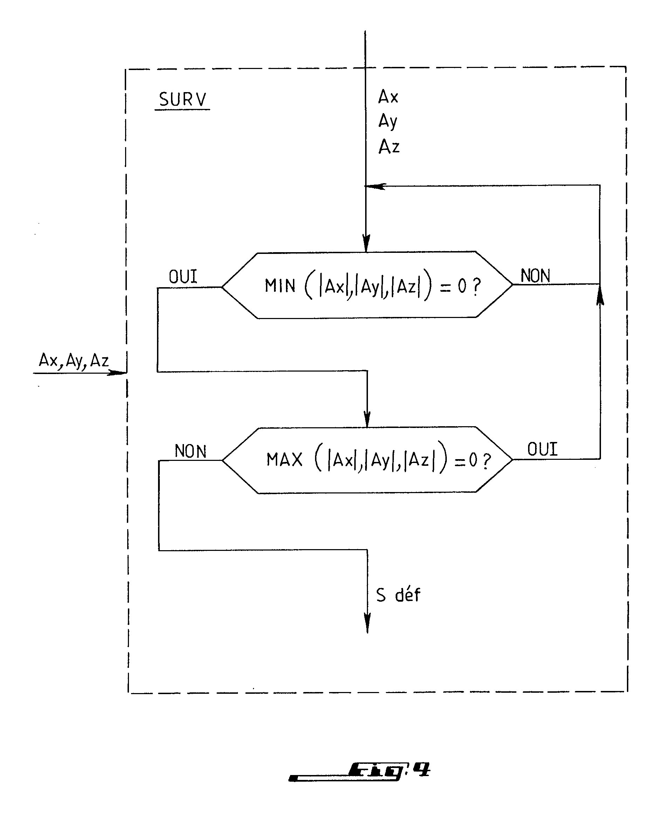

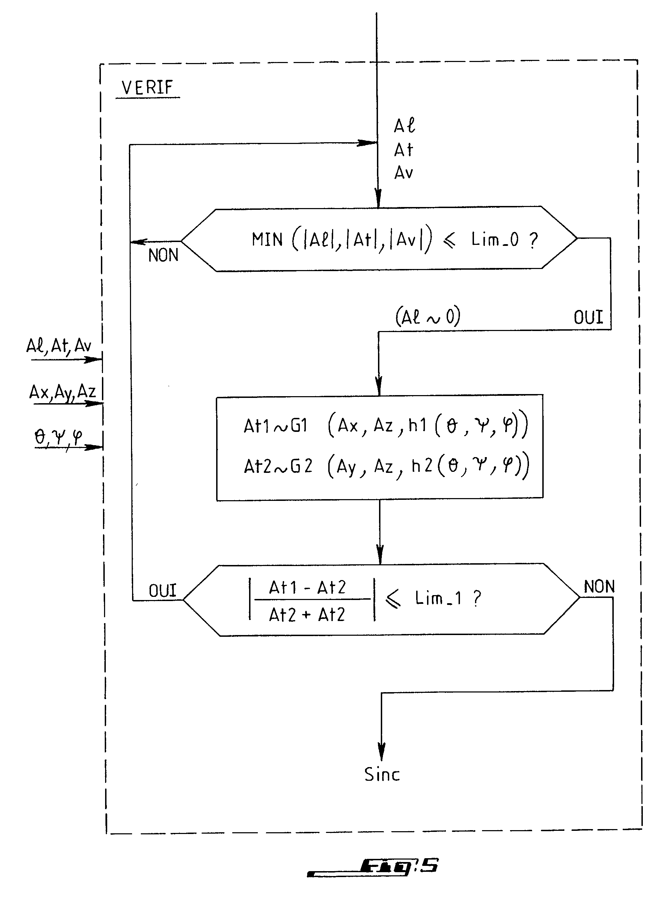

Ainsi, le procédé de l'invention comprend une phase d'exploitation des mesures, notée EXPL, dont une étape notée CALC_REF est consacrée à ce calcul de changement de référentiel (figure 3).
Au cours de l'étape CALC_REF, les composantes d'accélération Al, At, et Av de la roue 1 sont donc calculées au moyen de la matrice ci-dessus, c'est-à-dire par combinaison des mesures Ax, Ay, et Az fournies par l'accéléromètre 2 et de diverses fonctions trigonométriques faisant intervenir les angles d'inclinaison θ, ψ, et ϕ, et dépendant uniquement de l'orientation de l'accéléromètre 2 par rapport aux directions L, T, et V.
Comme le montrent les figures 3 et 4, la phase EXPL d'exploitation des mesures inclut une procédure notée SURV affectée à la surveillance du fonctionnement de l'accéléromètr 2.
Si par exemple, l'une des mesures Ax, Ay, et Az délivrées par l'accéléromètre 2 reste constamment et strictement nulle ou reste abberante pendant un temps prolongé, alors que les autres mesures continuent à varier et donc à rester opérationnelles, cet accéléromètre est manifestement défaillant.
Cette situation est représentée de façon simplifiée par l'organigramme de la figure 4.
Cette figure illustre une défaillance qui se traduit par le fait que la plus petite des valeurs absolues des mesures, c'est-à-dire MIN (|Ax|, |Ay|, |Az|) reste égale à zéro, alors que la plus grande des valeurs absolues des mesures, c'est-à-dire MAX (|Ax|, |Ay|, |Az|), est différente de zéro.
Dans un tel cas, ou si par exemple une mesure évolue de façon incohérente avec les lois de la dynamique, ou encore si un diagnostic interne de l'accéléromètre s'avère non satisfaisant, la procédure SURV émet un signal de défaillance Sdéf qui indique le caractère erroné de l'une des mesures Ax, Ay, et Az.

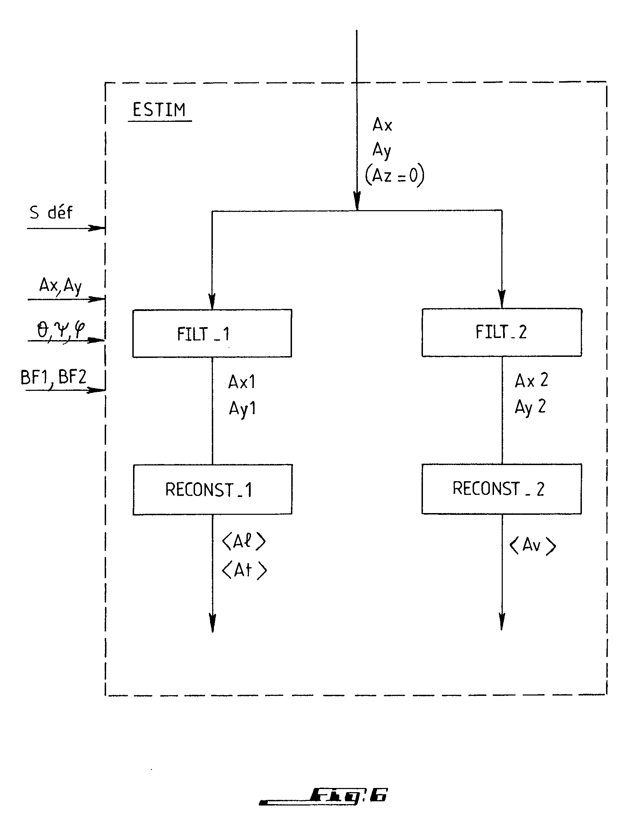

Comme le montre la figure 5, la phase EXPL d'exploitation des mesures Ax, Ay, et Az peut aussi inclure une étape de vérification de cohérence, notée VERIF.

Cette étape de vérification VERIF est avantageusement mise en oeuvre au moins lorsqu'une ou plusieurs des composantes d'accélération Al, At, et Av obtenues à l'issue de l'étape CALC_REF de calcul de changement de référentiel sont inférieures à un seuil prédéterminé Lim_0.

La figure 5 illustre à titre d'exemple le cas où la composante d'accélération Al est transitoirement nulle, ou suffisamment faible pour être négligée.

Cette situation se traduit par la relation :

$$\begin{bmatrix} Ax \\ Ay \\ Az \end{bmatrix} = \begin{bmatrix} R11 & R12 & R13 \\ R21 & R22 & R23 \\ R31 & R32 & R33 \end{bmatrix} \otimes \begin{bmatrix} 0 \\ At \\ Av \end{bmatrix},$$

avec

$R11 = \cos(\Psi) . \cos(\Theta)$
$R12 = \cos(\Psi) . \sin(\Theta)$
$R13 = -\sin(\Psi)$
$R21 = \sin(\Phi) . \sin(\Psi) . \cos(\Theta) - \cos(\Phi) . \sin(\Theta)$
$R22 = \sin(\Phi) . \sin(\Psi) . \sin(\Theta) + \cos(\Phi) . \cos(\Theta)$
$R23 = \sin(\Phi) . \cos(\Psi)$
$R31 = \cos(\Phi) . \sin(\Psi) . \cos(\Theta) + \sin(\Phi) . \sin(\Theta)$
$R32 = \cos(\Phi) . \sin(\Psi) . \sin(\Theta) - \sin(\Phi) . \cos(\Theta)$
$R33 = \cos(\Phi) . \cos(\Psi),$

de sorte, notamment, que :

$$Ax = (\cos \Psi . \sin \Theta) . At - (\sin \Psi) . Av$$

$$Ay = (\sin \Phi . \sin \Psi . \sin \Theta + \cos \Phi . \cos \Theta) . At +$$

$$(\sin \Phi . \cos \Psi) . Av$$

$$Az = (\cos \Phi . \sin \Psi . \sin \Theta - \sin \Phi . \cos \Theta) . At +$$

$$(\cos \Phi . \cos \Psi) . Av$$

et que deux valeurs, idéalement identiques, de chaque composante non négligée At et Av peuvent être calculées, à savoir pour At :

$$At1 = \{Ax . (\cos \Phi . \cos \Psi) + Az . (\sin \Psi)\} /$$

$$(\cos \Phi . \sin \Theta - \sin \Phi . \sin \Psi . \cos \Theta)$$

$$At2 = (Ay . \cos \Phi - Az . \sin \Phi) / \cos \Theta.$$

La première valeur At1 de la composante d'accélération non négligée, en l'occurrence At, est ainsi calculée à partir d'une première combinaison, notée G1, du couple de mesures Ax et Az, et de fonctions trigonométriques, globalement notées h1, des angles d'inclinaison θ, ψ, φ qui dépendent uniquement de l'orientation de l'accéléromètre 2.

La seconde valeur At2 de la même composante d'accélération non négligée At est calculée à partir d'une seconde combinaison G2 du couple de mesures Ay et Az, et de fonctions trigonométriques, globalement notées h2, des angles d'inclinaison θ, ψ, φ qui dépendent uniquement de l'orientation de l'accéléromètre 2.

Comme les valeurs At1 et At2 sont idéalement égales, il est possible de vérifier la fiabilité des mesures en évaluant la différence relative |(At1-At2) / (At1+At2)| de ces valeurs et en la comparant à une limite prédéterminée Lim_1.

Si cette différence dépasse la limite Lim_1, la fiabilité des mesures est mise en défaut, et l'étape de vérification VERIF se conclut par l'émission d'un signal d'incohérence Sinc.

L'homme de métier comprendra à la lecture de ce qui précède qu'un traitement semblable peut être appliqué à la composante Av.

Comme le montre la figure 6, la phase EXPL d'exploitation des mesures peut même inclure une procédure, notée ESTIM, permettant d'estimer par défaut la composante d'accélération Av suivant la direction verticale V en cas de défaillance de l'accéléromètre 2.

Plus précisément, la procédure ESTIM est déclenchée par le signal de défaillance Sdéf au moins dans le cas où la valeur de la troisième mesure Az reste constamment nulle ou devient abberante, alors que l'une au moins des première et seconde mesures Ax et Ay reste opérationnelle, c'est-à-dire continue de prendre une valeur non nulle et non aberrante et variable dans le temps.

La procédure ESTIM tire en fait profit de ce que les accélérations Al et At subies par la roue 1 suivant les directions longitudinale L et transversale T évoluent dans un premier domaine de fréquence BF1, par exemple de 0 à 0.5 Hz, tandis que les accélérations Av subies par la roue 1 suivant la direction verticale V évoluent dans un second domaine de fréquence BF2, différent et disjoint du premier, par exemple de 2 à 10 Hz.

L'estimation de la composante d'accélération Av suivant la direction verticale V comprend une étape de filtrage FILT_2 appliquée à l'une ou à chacune des mesures encore opérationnelles, c'est-à-dire Ax et / ou Ay, et dans laquelle chaque mesure filtrée est débarrassée de ses composantes fréquentielles appartenant au premier domaine de fréquence BF1.

En d'autres termes, l'étape de filtrage FILT_2 fournit l'amplitude, telle que Ax2 ou Ay2, que présente chaque mesure filtrée, telle que Ax ou Ay, dans le second domaine de fréquence BF2.

Comme les composantes d'accélération Al et At ont une amplitude nulle dans le second domaine de fréquence BF2, les amplitudes Ax2 et Ay2 sont idéalement données par les relations :

$$Ax2 = - (\sin \Psi). \, Av,$$

et

$$Ay2 = (\sin \Phi.\cos \Psi) . \, Av,$$

à partir de chacune desquelles il est possible de produire une valeur estimée <Av> de Av à l'issue d'une étape de reconstruction RECONST_2 consistant en substance à calculer <Av> par l'une ou l'autre des relations :

$$<Av> = - Ax2 / (\sin \Psi),$$

et

$$<Av> = Ay2 / (\sin \Phi.\cos \Psi).$$

Comme le comprendra l'homme de l'art à la lecture de ce qui précède, et comme l'illustre la figure 6, la procédure ESTIM peut aussi comprendre une étape de filtrage FILT_1 appliquée à l'une ou à chacune des mesures encore opérationnelles, c'est-à-dire Ax et / ou Ay, et dans laquelle chaque mesure filtrée est débarrassée de ses composantes fréquentielles appartenant au second domaine de fréquence BF2, cette autre étape de filtrage étant suivie d'une autre étape de reconstruction RECONST_1 consistant en substance à calculer des estimées <Al> et <At> des composantes d'accélération Al et At au moyen du système :

$$Ax1 = (\cos \Psi.\cos \Theta).Al + (\cos \Psi.\sin \Theta).At,$$

et

$$Ay1 = (\sin \Phi.\sin \Psi.\cos \Theta - \cos \Phi.\sin \Theta).Al +$$

$$(\sin \Phi.\sin \Psi.\sin \Theta + \cos \Phi.\cos \Theta).At.$$

**Revendications**

1. Procédé pour évaluer des accélérations subies par une pièce mobile, notamment un organe (1) d'un véhicule, tel qu'une partie d'un véhicule automobile, présentant une mobilité suivant trois directions mutuellement perpendiculaires comprenant une direction longitudinale horizontale (L), dans laquelle le véhicule se déplace de manière privilégiée, une direction transversale horizontale (T), et une direction verticale (V), ce procédé comprenant une phase d'installation consistant à fixer à l'organe un accéléromètre (2) présentant des premier, second et troisième axes sensibles (X, Y, Z) mutuellement perpendiculaires et fournissant des première, seconde et troisième mesures d'accélération (Ax, Ay, Az) suivant les trois axes sensibles respectifs (X, Y, Z), **caractérisé en ce que** la phase d'installation est mise en oeuvre en donnant à l'accéléromètre (2) une orientation dans laquelle aucun axe sensible (X, Y, Z) n'est parallèle à l'une des directions longitudinale (L), transversale (T) et verticale (V), ce dont il résulte que la mesure (Ax, Ay, Az) fournie par l'accéléromètre (2) pour chaque axe sensible (X, Y, Z) rend compte de composantes d'accélération (Al, At, Av) de l'organe (1) suivant deux au moins des directions longitudinale (L), transversale (T) et verticale (V).

2. Procédé suivant la revendication 1, **caractérisé en ce que** l'inclinaison des axes sensibles (X, Y, Z) de l'accéléromètre (2) se déduit d'une configuration dans laquelle les premier, second et troisième axes sensibles (X, Y, Z) sont respectivement alignés sur les directions longitudinale (L), transversale (T) et verticale (V) au moins par une première rotation de l'accéléromètre (2) autour du troisième axe (Z), d'amplitude égale à un premier angle d'inclinaison ($\theta$), et par une deuxième rotation de l'accéléromètre (2) autour du deuxième axe (Y), d'amplitude égale à un second angle d'inclinaison ($\psi$), ce dont il résulte que chacune des première et troisième mesures (Ax, Az) rend compte de composantes d'accélération (Al, At, Av) de l'organe (1) suivant les trois directions (L, T, V) de mobilité de ce dernier, et que la seconde mesure (Ay) rend compte de composantes d'accélération (Al, At) de l'organe (1) au moins suivant les directions longitudinale (L) et transversale (T).

3. Procédé suivant la revendication 2, **caractérisé en ce que** l'inclinaison des axes sensibles (X, Y, Z) de l'accéléromètre (2) se déduit d'une configuration dans laquelle les premier, second et troisième axes sensibles (X, Y, Z) sont respectivement alignés sur les directions longitudinale (L), transversale (T) et verticale (V) par les première et deuxième rotations ainsi que par une troisième rotation de l'accéléromètre (2) autour du premier axe (X), d'amplitude égale à un troisième angle d'inclinaison ($\phi$), ce dont il résulte que chacune des mesures (Ax, Ay, Az) rend compte de composantes d'accélération (Al, At, Av) de l'organe (1) suivant les trois directions (L, T, V) de mobilité de ce dernier.

4. Procédé suivant l'une quelconque des revendications 2 et 3, **caractérisé en ce qu'**il comprend une phase (EXPL) d'exploitation des mesures incluant une étape (CALC_REF) de calcul de changement de référentiel, dans laquelle les composantes d'accélération (Al, At, Av) de l'organe (1) suivant les directions longitudinale (L), transversale (T) et verticale (V) sont calculées par combinaison des première, seconde et troisième mesures (Ax, Ay, Az) et de fonctions trigonométriques des angles d'inclinaison ($\theta$, $\psi$, $\phi$) qui dépendent uniquement de l'orientation de l'accéléromètre (2).

5. Procédé suivant la revendication 4, **caractérisé en ce que** la phase (EXPL) d'exploitation des mesures inclut une procédure (SURV) de surveillance de fonctionnement de l'accéléromètre (2), dans laquelle un signal de défaillance (Sdéf) est émis au moins lorsque la valeur de l'une au moins des mesures (Ax, Ay, Az) reste constamment nulle ou devient aberrante alors que l'une au moins des autres mesures reste opérationnelle et prend une valeur non nulle et non aberrante et variable dans le temps.

6. Procédé suivant la revendication 5, **caractérisé en ce que** la phase (EXPL) d'exploitation des mesures inclut une étape (VERIF) de vérification de cohérence, au moins mise en oeuvre lorsque l'une au moins des composantes d'accélération (Al, At, Av) obtenues à l'issue de l'étape (CALC_REF) de calcul de changement de référentiel est inférieure à un seuil prédéterminé (Lim_0), dans laquelle au moins une composante d'accélération (Al) inférieure au seuil (Lim_0) est négligée, dans laquelle une première valeur (At1) d'une composante d'accélération non négligée (At) est calculée à partir d'une première combinaison (G1) d'un premier couple (Ax, Az) de mesures et de fonctions trigonométriques (h1) des angles d'inclinaison ($\theta$, $\psi$, $\phi$) qui dépendent uniquement de l'orientation de l'accéléromètre (2), dans laquelle une seconde valeur (At2) de la même composante d'accélération non négligée (At) est calculée à partir d'une seconde combinaison (G2) d'un second couple (Ay, Az) de mesures et de fonctions trigonométriques (h2) des angles d'inclinaison ($\theta$, $\psi$, $\phi$) qui dépendent uniquement de l'orientation de l'accéléromètre (2), et dans laquelle un signal d'incohérence (Sinc) est émis lorsque les première et seconde valeurs (At1, At2) de la composante d'accélération non négligée (At) présentent entre elles une différence relative ( $|$(At1-At2) / (At1+At2)$|$ ) supérieure à une limite prédéterminée (Lim_1).

7. Procédé suivant l'une quelconque des revendications 5 et 6, **caractérisé en ce que** la phase (EXPL) d'exploitation des mesures inclut une procédure d'estimation par défaut (ESTIM) de la composante d'accélération (Av) suivant la direction verticale (V), déclenchée par le signal de défaillance (Sdéf) au moins lorsque la valeur de la troisième mesure (Az) reste constamment nulle ou devient aberrante alors que l'une au moins des première et seconde mesures (Ax, Ay) reste opérationnelle et prend une valeur non nulle et non aberrante et variable dans le temps.

8. Procédé suivant la revendication 7, **caractérisé en ce que** les accélérations (Al, At) subies par l'organe (1) suivant les directions longitudinale (L) et transversale (T) évoluent dans un premier domaine de fréquence (BF1), **en ce que** les accélérations (Av) subies par l'organe (1) suivant la direction verticale (V) évoluent dans un second domaine de fréquence (BF2), différent du premier (BF1), et **en ce que** la procédure d'estimation par défaut (ESTIM) de la composante d'accélération (Av) suivant la direction verticale (V) comprend une étape de filtrage (FILT_2) appliquée à l'une au moins des mesures opérationnelles et dans laquelle est évaluée l'amplitude (Ax2, Ay2) de cette mesure opérationnelle (Ax, Ay) dans le second domaine de fréquence (BF2), et une étape de reconstruction (RECONST_2) dans laquelle la composante d'accélération (Av) suivant la direction verticale (V) est estimée (<Av>) à partir au moins de l'amplitude (Ax2, Ay2) de la mesure opérationnelle filtrée et d'une fonction trigonométrique dépendant uniquement de l'orientation de l'accéléromètre (2).

9. Procédé suivant l'une quelconque des revendications précédentes combinée à la revendication 2, **caractérisé en ce que** chaque angle d'inclinaison ($\theta$, $\psi$, $\phi$) est compris entre 10 degrés et 20 degrés environ.

10. Procédé suivant l'une quelconque des revendications précédentes, **caractérisé en ce que** l'organe (1) est constitué par une roue (1) d'un véhicule automobile.

_Fig.1_

_Fig.2_

SURV

Ax,Ay,Az →

S déf

CALC _REF

$$\begin{bmatrix} A\ell \\ At \\ Av \end{bmatrix} = \begin{bmatrix} B \end{bmatrix}^T . \begin{bmatrix} Ax \\ Ay \\ Az \end{bmatrix}$$

θ,Ψ,φ →

$A\ell$
$At$
$Av$

ESTIM

$\langle A\ell \rangle$
$\langle At \rangle$
$\langle Av \rangle$

VERIF

S inc

EXPL

Fig.3

SURV

Ax
Ay
Az

$MIN\left(|Ax|,|Ay|,|Az|\right) = 0$ ? — OUI / NON

Ax, Ay, Az

$MAX\left(|Ax|,|Ay|,|Az|\right) = 0$ ? — NON / OUI

S déf

*Fig. 4*

VERIF

$A\ell$
$At$
$Av$

$Al, At, Av$

$Ax, Ay, Az$

$\theta, \Psi, \varphi$

$MIN\left(|A\ell|, |At|, |Av|\right) \leqslant Lim\_0\ ?$

NON

$(A\ell \sim 0)$      OUI

$At1 \sim G1\ \left(Ax, Az, h1\left(\theta, \Psi, \varphi\right)\right)$

$At2 \sim G2\ \left(Ay, Az, h2\left(\theta, \Psi, \varphi\right)\right)$

OUI     $\left|\dfrac{At1 - At2}{At2 + At2}\right| \leqslant Lim\_1\ ?$     NON

Sinc

Fig.5

Fig. 6

Office européen
des brevets

**RAPPORT DE RECHERCHE EUROPEENNE**

Numéro de la demande

EP 03 29 0883

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 100 15 273 A (SIEMENS AG) 11 octobre 2001 (2001-10-11) * alinéas '0028!-'0044!; figures 1-4 * --- | 1 | G01P21/00 G01P15/00 B60G17/015 |
| A | US 6 032 092 A (LAASER WALTER) 29 février 2000 (2000-02-29) * colonne 3, ligne 30 - colonne 5, ligne 35; figures 1-3 * ----- | 1 | |

**DOMAINES TECHNIQUES RECHERCHES (Int.Cl.7)**

G01P
B60G

Le présent rapport a été établi pour toutes les revendications

| Lieu de la recherche | Date d'achèvement de la recherche | Examinateur |
|---|---|---|
| LA HAYE | 30 juillet 2003 | Pflugfelder, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**EP 1 355 161 A1**

**ANNEXE AU RAPPORT DE RECHERCHE EUROPEENNE
RELATIF A LA DEMANDE DE BREVET EUROPEEN NO.**
EP 03 29 0883

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-07-2003

| Document brevet cité au rapport de recherche | Date de publication | Membre(s) de la famille de brevet(s) | Date de publication |
|---|---|---|---|
| DE 10015273 A | 11-10-2001 | DE 10015273 A1 | 11-10-2001 |
| US 6032092 A | 29-02-2000 | DE 19645952 A1 | 20-05-1998 |

EPO FORM P0460

Pour tout renseignement concernant cette annexe : voir Journal Officiel de l'Office européen des brevets, No.12/82